# EUROPEAN PATENT APPLICATION

(11) **EP 4 656 056 A1**
(43) Date of publication of application: **03.12.2025**
(21) Application number: 24747373.9
(22) Date of filing: 26.01.2024
(51) Int. Cl.: A23D 9/00, A23G 1/38

(54) **OIL AND FAT COMPOSITION CONTAINING MONOVALENT OMEGA 7 UNSATURATED FATTY ACID, AND CHOCOLATE**

(30) Priority: 27.01.2023 JP 2023011198; 11.09.2023 WO PCT/JP2023/033013
(71) Applicant: Fuji Oil Company, Limited, Izumisano-shi Osaka 598-8540 (JP)
(72) Inventor: WATANABE, Shimpei, Tsukubamirai-shi, Ibaraki 300-2436 (JP); ISHIWARI, Kenji, Tsukubamirai-shi, Ibaraki 300-2436 (JP); SHIBATA, Masayuki, Tsukubamirai-shi, Ibaraki 300-2436 (JP)
(74) Representative: Boult Wade Tennant LLP
(86) International application number: PCT/JP2024/002393
(87) International publication number: WO 2024/158049

(57) **Abstract**

Fat bloom and graining can be suppressed by blending an oil and/or fat composition containing 40 wt.% or more of a triglyceride (S2M) in which one monounsaturated fatty acid and two saturated fatty acids are bonded and 4 wt.% or more of a triglyceride (S2X) in which one ω7 monounsaturated fatty acid and two saturated fatty acids are bonded, in a chocolate mainly composed of a triglyceride (S20) in which one oleic acid and two saturated fatty acids are bonded.

## Description

### Technical Field

The present invention relates to an oil and/or fat composition for a chocolate and a chocolate containing the oil and/or fat composition.

### Background Art

Chocolate is roughly classified into a tempering type and a non-tempering type. An oil and/or fat used in the tempering type chocolate contains a symmetrical disaturated monooleic acid type triacylglycerol (hereinafter, sometimes described as S2O) as a main component. The symmetrical S2O can take a stable polymorph Form V by a tempering operation. However, when this chocolate is stored for a long period of time, the crystal polymorph is transformed to a more stable VI type, and, as a result, the surface of the chocolate may lose its gloss possessed immediately after the production and further, may produce a white discolored state called "fat bloom" (hereinafter, also simply referred to as "bloom"), resulting in impairment of the commercial value.

The non-tempering type chocolate is classified into a trans acid type, a lauric acid type, and a type using an oil and/or fat containing substantially no trans acid or lauric acid. The latter type oils and/or fats containing substantially no trans acid or lauric acid contain symmetrical and asymmetrical S2Os as main components. Chocolate using this type of oil and/or fat is stable with the oil and/or fat crystals taking an unstable form or a metastable form immediately after production, but the crystal polymorph is transformed to a stable form during subsequent storage, and, as a result, appearance deterioration (fat bloom), texture deterioration (graining), and the like may occur, resulting in impairment of the commercial value.

In the case of a tempering type chocolate containing symmetrical and/or asymmetrical S2O as a main component or a type of chocolate containing substantially no trans acid or lauric acid, the problems of appearance deterioration (fat bloom) and texture deterioration (graining) occur due to the crystal polymorphic transformation as described above. Therefore, various methods have been proposed to solve the problem by suppressing the crystal polymorphic transformation.

As the above method, methods of adding a chemical substance other than triglycerides, such as sugar ester (Non-Patent Document 1) or sorbitan ester (Non-Patent Document 2), and a method of adding a specific triglyceride composition, for example, a triglyceride composition containing from 20 to 60% of saturated fatty acid having 22 carbon atoms as a constituent fatty acid (Patent Document 1), a triglyceride composition containing from 15 to 70% of saturated fatty acid having from 20 to 24 carbon atoms and from 20 to 60% of unsaturated fatty acid having from 16 to 20 carbon atoms as constituent fatty acids (Patent Document 2), an oil and/or fat composition containing mono-U-di-S type triglyceride (SSU) (Patent Document 3), a milk fat high melting point fraction (Non-Patent Document 3), or the like are known.

### Citation List

### Patent Literature

Patent Document 1: JP S58-198245 A
Patent Document 2: JP S62-006635 A
Patent Document 3: JP H2-138937 A

### Non-Patent Document

Non-Patent Document 1: KATSURAGI, Toshiya; SATO, Kiyotaka. Effects of emulsifiers on fat bloom stability of cocoa butter. Journal of Oleo Science, 2001, 50.4: 243-248.

Non-Patent Document 2: BUSCATO, Monise Helen Masuchi, et al. Delaying fat bloom formation in dark chocolate by adding sorbitan monostearate or cocoa butter stearin. Food chemistry, 2018, 256: 390-396.

Non-Patent Document 3: LOHMAN, Myung H.; HARTEL, Richard W. Effect of milk fat fractions on fat bloom in dark chocolate. Journal of the American Oil Chemists' Society, 1994, 71.3: 267-276.

### Summary of Invention

### Technical Problem

An object of the present invention is to provide an oil and/or fat composition which prevents fat bloom and graining without impairing meltability in the mouth and workability for chocolate containing S2O as a main component.

### Solution to Problem

The present inventors have conducted various studies for the above purpose.

Various measures as described above have been taken to solve the problems of the appearance deterioration and texture deterioration of the chocolate caused by the crystal polymorphic transformation of the oil and/or fat in the tempering type or non-tempering type chocolate using the oil and/or fat containing S2O as a main component as described above.

One of the measures is use of additives such as food additives, but use of chemicals other than triglycerides has been legally restricted in some countries. In the case of adding a specific triglyceride composition as another measure, the inventors have found a problem such as a possibility that, although this approach can be effective for preventing bloom, it may adversely lead to impairment in chocolate meltability in the mouth or an increase in the viscosity of a mix during tempering which deteriorates workability.

During characterization of the crystal polymorph of S2O, the present inventors have conducted various studies focusing on differences in characteristics due to differences in chain lengths and positions of double bonds of unsaturated fatty acids bonded, and have found, for the first time, a phenomenon of delayed polymorphic transformation of S2O due to coexistence of a triglyceride of mixed acids of a saturated fatty acid and a ω7 monounsaturated fatty acid.

The present inventors have found that, with reference to the above-mentioned phenomenon of the delayed polymorphic transformation which has not been known, fat bloom and graining can be suppressed by blending an oil and/or fat composition containing 40 wt.% or more of a triglyceride (S2M) in which one monounsaturated fatty acid and two saturated fatty acids are bonded and 4 wt.% or more of a triglyceride (S2X) in which one ω7 monounsaturated fatty acid and two saturated fatty acids are bonded, in a chocolate mainly composed of a triglyceride (S2O) in which one oleic acid and two saturated fatty acids are bonded. Thus, the present inventors have completed the present invention.

That is, the present invention relates to:
(1) an oil and/or fat composition containing: 40 wt.% or more of a triglyceride (S2M) in which one monounsaturated fatty acid and two saturated fatty acids are bonded; and 4 wt.% or more of a triglyceride (S2X) in which one ω7 monounsaturated fatty acid and two saturated fatty acids are bonded, wherein S represents a saturated fatty acid having from 16 to 22 carbon atoms, M represents a monounsaturated fatty acid having from 16 to 22 carbon atoms, and X represents an ω7 monounsaturated fatty acid;
(2) the oil and/or fat composition according to (1), wherein a proportion of the S2X in the S2M is 5% or more;
(3) the oil and/or fat composition according to (1) or (2), wherein a solid fat content (SFC) at 20°C is 30% or more;
(4) the oil and/or fat composition according to (1) or (2), wherein the oil and/or fat composition is for a chocolate;
(5) a chocolate containing the oil and/or fat composition described in (1) or (2);
(6) the chocolate according to (5), wherein fat bloom or graining is suppressed;
(7) the chocolate according to (5), wherein an amount of the S2X in chocolate oil and/or fat is 0.7 wt.% or more;
(8) the chocolate according to (7), wherein the chocolate is a tempering type chocolate;
(9) the chocolate according to (7), wherein the chocolate is a non-tempering type chocolate;
(10) a method for producing a chocolate, the method including: preparing a chocolate mix containing the oil and/or fat composition described in (1) or (2), wherein an amount of the S2X in chocolate oil and/or fat is 0.7 wt.% or more; and solidifying the prepared mix with or without a tempering treatment;
(11) an agent for suppressing crystal transformation of an S2O triglyceride, the agent containing S2X as an active ingredient, wherein S represents a saturated fatty acid having from 16 to 22 carbon atoms, X represents an ω7 monounsaturated fatty acid, and O means oleic acid; and
(12) a method for suppressing fat bloom or graining in a chocolate, the method including adding the oil and/or fat described in (1) or (2) to a chocolate mix.

### Advantageous Effects of Invention

The oil and/or fat composition of the present invention is advantageous in that blending the oil and/or fat composition in a tempering type chocolate mainly composed of a symmetrical S2O among chocolates mainly composed of S2O can suppress fat bloom and graining without impairing texture and tempering properties.

### Description of Embodiments

The present invention will be described in detail below.

In the present specification, the chocolate is an oil and/or fat processed food in which oils and/or fats form a continuous phase, and refers to not only chocolates, quasi-chocolates, and chocolate-based foods defined by the Japan National Chocolate Industry Fair Trade Council and the Chocolate-Based Food Fair Trade Council, but also products containing raw materials such as an oil and/or fat, a milk powder, a saccharide, a cacao raw material (cacao mass, cocoa, or cocoa butter), a fruit juice powder, a fruit powder, a tasting material, an emulsifier, a flavor, and a colorant in any proportions.

In the present specification, S represents a saturated fatty acid, more specifically, a saturated fatty acid having from 16 to 22 carbon atoms, M represents a monounsaturated fatty acid, more specifically, a monounsaturated fatty acid having from 16 to 22 carbon atoms, X represents an ω7 monounsaturated fatty acid, St represents stearic acid, P represents palmitic acid, O represents oleic acid, Po represents palmitoleic acid, and V represents cis-vaccenic acid. When triglycerides are abbreviated, for example, S2O represents a triglyceride in which two saturated fatty acids and one oleic acid are bonded, SSO represents a triglyceride in which saturated fatty acids are bonded to the 1- and 2-positions and oleic acid is bonded to the 3-position, and SOS represents a triglyceride in which saturated fatty acids are bonded to the 1- and 3-positions and oleic acid is bonded to the 2-position.

### Oil and/or Fat Composition

In an aspect, the present invention provides an oil and/or fat composition. The oil and/or fat composition of the present aspect includes an oil and/or fat itself unless otherwise specified. In an embodiment, the oil and/or fat composition of the present aspect is not an oil and/or fat itself, but contains other raw materials. A content of S2X in the oil and/or fat composition of the present aspect is 4.0 wt.% or more, preferably from 5.0 to 70 wt.%, more preferably from 7.0 to 60 wt.%, still more preferably from 10 to 50 wt.%, and most preferably from 13 to 40 wt.%, and other preferred examples of the content are from 15 to 65 wt.%, from 20 to 55 wt.%, and from 25 to 45 wt.%. The amount of the oil and/or fat composition added to a chocolate to exhibit the effect is generally smaller as the content of S2X as an active ingredient in the oil and/or fat composition is larger; and such an amount of the oil and/or fat composition is larger as the content of S2X is smaller.

A content of S2M in the oil and/or fat composition of the present aspect is 40 wt.% or more, preferably from 45 to 95 wt.%, more preferably from 50 to 93 wt.%, still more preferably from 55 to 90 wt.%, and most preferably from 60 to 88 wt.%. If the content is low, the product may tend to have a sticky texture.

In an embodiment, an amount of S2X in S2M is preferably 4.8 wt.% or more, for example, 5.0 wt.% or more, more preferably from 6.0 to 70 wt.%, further preferably from 8.0 to 60 wt.%, most preferably from 12 to 40 wt.%, and other preferred examples of the content are from 9 to 65 wt.%, from 15 to 55 wt.%, from 20 to 50 wt.%, and from 25 to 45 wt.%. Further, in an embodiment, an amount of S20 in S2M is preferably 95 wt.% or less, and more preferably from 50 to 90 wt.%, and another preferred example of the content is from 70 to 85 wt.%.

When the content of S2X or the amount of S2X in S2M is low, the content of S2X in a chocolate cannot be efficiently increased, and the composition may lose an effect as an oil and/or fat composition to be added in a small amount. In addition, the quality of the chocolate may be impaired by a component other than S2X, depending on the component.

In an embodiment, an amount of a triglyceride (S3) in which three saturated fatty acids are bonded in the oil and/or fat composition is preferably 20 wt.% or less, more preferably 15 wt.% or less, and even more preferably 10 wt.% or less, for example, from 0.5 to 5 wt.%, from 1 to 3 wt.%, from 1.2 to 2.5 wt.%, or from 1.5 to 2.0 wt.%. The large amount of S3 may readily impair workability due to an increase in viscosity of a mix during tempering.

In an embodiment, a content of X in constituent fatty acids of the oil and/or fat composition is preferably from 1 to 30 wt.%, more preferably from 2 to 25 wt.%, still more preferably from 3 to 20 wt.%, and most preferably from 4 to 15 wt.%.

In an embodiment, an X/M ratio (ω7 monounsaturated fatty acid/monounsaturated fatty acid) in the constituent fatty acids of the oil and/or fat composition is preferably from 4.5 to 55, and more preferably from 5 to 50, for example, from 5.5 to 55, from 6 to 50, from 10 to 40, or from 15 to 30.

In an embodiment, a content of S (saturated fatty acid) in the constituent fatty acids of the oil and/or fat composition is preferably from 35 to 85 wt.%, more preferably from 40 to 80 wt.%, still more preferably from 45 to 75 wt.%, and most preferably from 50 to 70 wt.%, for example, from 63 to 67 wt.%.

In an embodiment, contents of DHA and EPA in the oil and/or fat composition are preferably low. More specifically, a content of DHA + EPA in the oil and/or fat composition is preferably less than 2%, for example, from 0 to 1.5%, or from 0.5 to 1.0%.

In an embodiment, a solid fat content (SFC) of the oil and/or fat composition at 10°C is preferably 85% or more, and more preferably from 86 to 94%, for example from 90 to 93%.

In an embodiment, an SFC of the oil and/or fat composition at 20°C is preferably 30% or more, more preferably from 40 to 90%, and still more preferably from 50 to 80%, for example, from 70 to 79% or from 75 to 78%.

In an embodiment, an SFC of the oil and/or fat composition at 25°C is preferably 6.5% or more, for example, 20% or more, more preferably from 8 to 72%, and still more preferably from 9 to 71%, for example, from 25 to 70%, from 27 to 65%, from 30 to 64%, or from 35 to 62%.

In an embodiment, an SFC of the oil and/or fat composition at 30°C is preferably 55% or less, for example, 10% or less, more preferably from 0 to 52%, and still more preferably from 1 to 50%, for example, from 0 to 8%, from 1 to 7%, or from 1.5 to 4.5%.

### ω7 monounsaturated fatty acid

The ω7 unsaturated fatty acid is one of the classes of unsaturated fatty acids, and has an unsaturated bond located at the seventh carbon from the end of the carbon chain. In the present aspect, the ω7 unsaturated fatty acid is an ω7 monounsaturated fatty acid.

Examples of the ω7 monounsaturated fatty acid (sometimes referred to as X in the present specification) include cis-unsaturated fatty acids having from 16 to 20 carbon atoms, and more specifically include palmitoleic acid (cis-9 hexadecenoic acid, sometimes described as Po in the present specification) and cis-vaccenic acid (cis-11 octadecenoic acid, sometimes described as V in the present specification), but are not limited thereto. In a more specific embodiment, the ω7 monounsaturated fatty acid is palmitoleic acid.

### Raw Material of Oil and/or Fat Composition

The raw material of the oil and/or fat composition of the present aspect is not particularly limited as long as it is an edible oil and/or fat containing a ω7 monounsaturated fatty acid, and examples thereof include marine oils, various natural animal and plant oils such as plant oils and/or fats, and oils and/or fats obtained from microorganisms and algae.

In addition, oils and/or fats obtained from plants, microorganisms, and algae whose fatty acid composition has been modified so as to contain a ω7 monounsaturated fatty acid by using known breeding techniques using natural mutants and artificial mutants, or new breeding techniques represented by gene recombination techniques and genome editing techniques can also be used.

As the raw material of the oil and/or fat composition of the present aspect, sea buckthorn oil (seaberry fruit oil), Bacuri fat, macadamia nut oil, hazelnut oil, seal oil, and the like are preferable in terms of purity and cost. An example of a raw material containing palmitoleic acid and cis-vaccenic acid is sea buckthorn oil (seaberry fruit oil). Examples of the raw material containing palmitoleic acid include Bacuri fat, macadamia nut oil, hazelnut oil, and seal oil.

Sea buckthorn oil (seaberry fruit oil) and Bacuri fat are particularly preferable because they inherently contain an S2X triglyceride and, for example, the oil and/or fat composition of the present aspect can be obtained as an S2X triglyceride-enriched fraction by fractionation of the oil and/or fat.

Further, the oil and/or fat containing an S2X triglyceride can be obtained by an interesterification reaction of an oil and/or fat rich in X with a raw material containing S, and, for example, the oil and/or fat composition of the present invention can be obtained as this oil and/or fat as it is or as an S2X triglyceride-enriched fraction by fractionation of the oil and/or fat.

Examples of the raw material containing S include oils and/or fats, fatty acids, and lower alcohol esters thereof.

In an aspect, the present invention also provides a method for producing the oil and/or fat composition of the above embodiment by fractionation and/or interesterification of an oil and/or fat.

In the present aspect, the oil and/or fat to be subjected to fractionation and interesterification is as described above (Raw Material of Oil and/or Fat Composition).

The oil and/or fat may be fractionated by solvent fractionation or dry fractionation. Examples of solvents used in the solvent fractionation include acetone and hexane. In the case of using hexane, a charge mix having an oil content of from 5 to 35% is prepared, and the oil and/or fat composition of the above aspect can be obtained as a crystal part after crystallization at from - 25°C to 0°C. In the case of using acetone, a charge mix having an oil content of from 5 to 35% is prepared, and the oil and/or fat composition of the above aspect can be obtained as a crystal part after crystallization at from -5°C to 10°C.

The interesterification may be a chemical random interesterification method using an alkali metal catalyst, or may be a 1,3-position enzyme interesterification method or a random interesterification method using an enzyme catalyst.

### Chocolates

In an aspect, the present invention provides a chocolate containing the oil and/or fat composition of the above aspect.

In an embodiment, the chocolate of the present aspect is a tempering type chocolate. The chocolate of the present embodiment preferably contains S2O in an amount of from 35 to 90 wt.%, more preferably from 40 to 80 wt.%, and still more preferably from 50 to 78.3 wt.%, for example, from 70 to 78 wt.% or from 72 to 77 wt.% in chocolate oil and/or fat. In addition, the chocolate preferably contains a symmetrical type (SOS) of S2O in an amount of 80 wt.% or more, more preferably from 85 to 99 wt.%, and still more preferably from 95 to 99.5 wt.%.

The chocolate of the present embodiment preferably contains an S2X triglyceride in an amount of 0.7 wt.% or more, preferably from 0.8 to 20 wt.%, more preferably from 1.1 to 15 wt.%, still more preferably from 1.5 to 10 wt.%, and most preferably from 2.2 to 5.5 wt.% in chocolate oil and/or fat.

When the content of the S2X triglyceride is small, the effect for improving bloom resistance of the chocolate is poor. When the content is large, the effect for improving bloom resistance is large, but when the content is too large, there is a possibility that difficulty may occur in tempering properties. In addition, an initial bite may become soft.

In another embodiment, the chocolate of the present aspect is a non-tempering type chocolate. The chocolate of the present embodiment preferably contains S2O in an amount of from 35 to 90 wt.%, more preferably from 40 to 80 wt.%, and still more preferably from 50 to 78.5 wt.%, for example, from 65 to 78 wt.% or from 70 to 76 wt.% in chocolate oil and/or fat. The chocolate preferably contains a symmetrical type of S20 in an amount of from 33 to 70 wt.%, more preferably from 40 to 65 wt.%, and still more preferably from 50 to 60 wt.%.

The chocolate of the present embodiment preferably contains an S2X triglyceride in an amount of 1.8 wt.% or more, preferably from 2.0 to 20 wt.%, more preferably from 2.5 to 15 wt.%, still more preferably from 3.0 to 10 wt.%, and most preferably from 4.5 to 7.5 wt.% in chocolate oil and/or fat.

When the content of the S2X triglyceride is small, the effect for improving bloom resistance of the chocolate is poor. When the content is large, the effect for improving bloom resistance is large, but when the content is too large, the initial bite may become soft.

In the chocolate of the present aspect, the oil and/or fat composition of the present invention containing an S2X triglyceride is used by being dissolved together with other oil and/or fat raw materials at the time of chocolate production, but may be used as it is or as an oil and/or fat raw material dissolved in other oils and/or fats, for example, cacao butter or hard butter.

An amount of the oil and/or fat composition of the present invention to be blended in the chocolate of the present aspect is preferably from 2 to 30 wt.%, more preferably from 3.5 to 25 wt.%, still more preferably from 5.0 to 20 wt.%, and most preferably from 7.0 to 15 wt.%.

In chocolate mainly composed of S2O, St2O, PStO and P2O are specific components, and among them, P2O is often problematic, and further, polymorphic transformation of symmetrical POP is often problematic. (St represents stearic acid, and P represents palmitic acid.)

That is, it is known that the texture deterioration and the appearance deterioration proceed significantly when, in a case of a tempering type chocolate, the POP undergoes transformation from a most stable polymorph (β2) to a most stable polymorph (β1), and, in a case of an oil-based food such as a non-tempering type chocolate in which no temperature control operation is performed, the POP undergoes polymorphic transformation from a metastable polymorph (β'2 chain length structure) to a most stable polymorph (β3 chain length structure). Therefore, suppressing or delaying the transformation is particularly important. Among S2Xs that are active ingredients of the oil and/or fat composition of an aspect of the present invention, particularly P2X, and further particularly symmetrical P2X (PXP), can effectively suppress such polymorphic transformation of POP, and thus is particularly effective for suppressing the texture deterioration and the appearance deterioration.

In an embodiment, fat bloom and graining are suppressed in the chocolate of the present aspect.

In an aspect, the present invention provides a method for producing the chocolate of the above aspect. As a specific example of the production method of the present aspect, the oil and/or fat composition as an aspect of the present invention is mixed with other raw materials such as oil and/or fat mainly composed of S2O, cacao components (cocoa mass, cocoa powder, etc.), saccharides (sucrose, lactose, dextrose, etc.), milk powders (whole milk powder, skim milk powder, etc.), and an emulsifier to prepare a chocolate mix, and the obtained mix is subjected to roll-refining, conching, etc. to produce a chocolate. In the case of producing a tempering type chocolate, the method includes tempering during the production, and in the case of producing a non-tempering type chocolate, the method includes no tempering.

Examples of the tempering step include: cooling or warming the mix; and adding a seed agent to the mix. The amount of the oil and/or fat composition to be added, the oil and/or fat composition of the mix, and the like are as described above.

In the case of producing a tempering type chocolate, a tempering type oil and/or fat can be used as the oil and/or fat mainly composed of S2O to be blended in the chocolate mix. The tempering type oil and/or fat herein refers to an oil and/or fat rich in SOS (triglyceride in which oleic acid is bonded to the 2-position and saturated fatty acids are bonded to the 1- and 3-positions) components, and typically includes cocoa butter. Specific examples of the tempering type oil and/or fat include a 1,3-position enzyme interesterified oil of a high oleic oil and a saturated fatty acid, a shea butter, a palm oil, a sal fat, a mango kernel oil, a kokum fat, an illipe fat, and fractionated oils thereof.

In the case of producing a non-tempering type chocolate, a non-tempering type oil and/or fat can be used as the oil and/or fat mainly composed of S2O to be blended in the chocolate mix. The non-tempering type oil and/or fat herein refers to an oil and/or fat rich in SSO (triglyceride in which a saturated fatty acid is bonded to the 2-position, and a saturated fatty acid and oleic acid are bonded to the 1- and 3-positions) components. Specific examples of the non-tempering type oil and/or fat include: oils and/or fats obtained by subjecting a raw oil and/or fat mixture to random interesterification; and fractionated oils thereof. Examples of the raw oil and/or fat include: plant oils and/or fats, such as palm oil, rapeseed oil, high erucic acid rapeseed oil, sunflower oil, high oleic sunflower oil, soybean oil, rice oil, corn oil, cottonseed oil, peanut oil, safflower oil, safflower oil, olive oil, sesame oil, shea butter, and sal fat; animal oils and/or fats, such as milk fat, beef tallow, lard, fish oil, and whale oil; and their hydrogenated oils, fractionated oils, hydrogenated fractionated oils, fractionated hydrogenated oils, and processed oils and/or fats obtained by interesterification; and furthermore mixed oils and/or fats thereof.

In an embodiment, the production method of the present aspect suppresses fat bloom and graining in a chocolate. As an aspect related to the present aspect, the present invention provides a method for suppressing fat bloom or graining in a chocolate, the method including adding the oil and/or fat composition of an aspect of the present invention containing an S2X triglyceride to a chocolate mix.

In an aspect, the present invention provides a method for inhibiting crystal transformation of an S2O triglyceride using an S2X triglyceride.

The method of the present aspect includes adding an S2X triglyceride to an oil and/or fat raw material containing an S2O triglyceride. The amount of the S2X triglyceride to be added is as described in the aspect of the oil and/or fat composition described above. In an embodiment, the S2X triglyceride of the present aspect is added in the form of the above-described oil and/or fat composition.

In another aspect, the present invention provides an agent for suppressing crystal transformation of an S2O triglyceride, the agent containing or consisting of the oil and/or fat composition of an aspect of the present invention containing an S2X triglyceride.

The "agent for suppressing crystal transformation of an S2O triglyceride" referred to in the present aspect is a novel application based on new properties, which has not been known, that makes it possible to prevent fat bloom and graining without impairing meltability in the mouth and workability when added to a chocolate mainly composed of an S2O triglyceride. The agent for suppressing crystal transformation of an S2O triglyceride of the present aspect is particularly suitable for the above application.

### Action Mechanism

The present invention has been accomplished by the discovery of a phenomenon that the polymorphic transformation of S20 (triglycerides of mixed acids of saturated fatty acids and oleic acids) is delayed by the coexistence of S2X (triglyceride of mixed acids of a saturated fatty acid and an ω7 monounsaturated fatty acid). Although crystallographic analysis of this is not incomplete, it is presumed that, in the crystal structure, the lamellae of saturated fatty acids are aligned, whereas the lamellae of unsaturated fatty acids in which oleic acid and ω7 monounsaturated fatty acids coexist are slightly misaligned even though these fatty acids are compatible without being phase-separated, and such a slight misalignment causes the delay of S2O polymorphic transformation.

### Examples

Examples will be described below, but the technical idea of the present invention is not limited to these examples. Note that in the examples, values in "part" or "%" are all expressed by weight.

### (Experiment 1A) Verification of Effect Obtained by Addition of Triglyceride P2Po Pure Product Containing Palmitoleic Acid Po

A POP triglyceride (commercially available sample having a purity of 99% or more) and a PPoP triglyceride (commercially available sample having a purity of 99% or more) were mixed at POP/PPoP ratios of (A) 100/0, (B) 95/5, (C) 85/15, and (D) 80/20, and each mixture was completely melted at 80°C. Thereafter, 5 µL of each melt was placed on an aluminum pan dropwise and immediately solidified at 5°C for 60 minutes. After solidification, the sample stored at 20°C from Day 0 to Day 14, at 25°C from Day 15 to Day 28, and at 28°C from Day 29 to Day 100 was subjected to X-ray crystal structure analysis to follow a change in crystal polymorph during storage.

The results obtained are summarized in Table 1.

In (A) 100% POP, it was clearly confirmed that the state was β2 until Day 21, but transformed to β1 on Day 28. On the other hand, in (B) and (C), such a crystal polymorphic transformation from β2 to β1 was not observed at all even in the storage test over 100 days. From this, it was confirmed that the crystal polymorphic transformation from β2 to β1 of POP can be suppressed with an addition of PPoP as small as 5%.

**Table 1A: Crystal polymorphic behavior in case of using POP/PPoP pure product**

| [Table 1A] | | | | |
|---|---|---|---|---|
| POP/PPoP | (A) 100/0 | (B) 95/5 | (C) 85/15 | (D) 80/20 |
| Day 1 | β2 | β2 | β2 | β' |
| Day 14 | β2 | β2 | β2 | β' |
| Day 21 | β2 | β2 | β2 | β' |
| Day 28 | β1 | β2 | β2 | β' |
| Day 56 | β1 | β2 | β2 | β' |
| Day 100 | β1 | β2 | β2 | β' |

| | | | | |
|---|---|---|---|---|
| (The polymorphs β', β2, and β1 are more stable in this order.) | | | | |

### (Experiment 1B) Verification of Effect Obtained by Addition of Triglyceride P2V Pure Product Containing Cis-Vaccenic Acid V

A POP triglyceride (commercially available sample having a purity of 99% or more) and a PVP triglyceride (commercially available sample having a purity of 99% or more) were mixed at POP/PVP ratios of (E) 100/0, (F) 95/5, (G) 60/40, and (H) 50/50, and each mixture was completely melted at 80°C. Thereafter, 5 µL of each melt was placed on an aluminum pan dropwise and immediately solidified at 5°C for 60 minutes. After solidification, the sample stored at 20°C from Day 0 to Day 14, at 25°C from Day 15 to Day 28, and at 28°C from Day 29 to Day 100 was subjected to X-ray crystal structure analysis to follow a change in crystal polymorph during storage.

The results obtained are summarized in Table 1B.

In (E) 100% POP, it was clearly confirmed that the state was β2 until Day 21, but transformed to β1 on Day 28. On the other hand, in (F), such a crystal polymorphic transformation from β2 to β1 was not observed at all even in the storage test over 100 days. From this, it was confirmed that the crystal polymorphic transformation from β2 to β1 of POP can be suppressed with an addition of PVP as small as 5%.

**Table 1B: Crystal polymorphic behavior in case of using POP/PVP pure product**

| [Table 1B] | | | | |
|---|---|---|---|---|
| POP/PVP | (E) 100/0 | (F) 95/5 | (G) 60/40 | (H) 50/50 |
| Day 1 | β2 | β2 | β' | β' |
| Day 14 | β2 | β2 | β' | β' |
| Day 21 | β2 | β2 | β' | β' |
| Day 28 | β1 | β2 | β' | β' |
| Day 56 | β1 | β2 | β' | β' |
| Day 100 | β1 | β2 | β' | β' |

| | | | | |
|---|---|---|---|---|
| (The polymorphs β', β2, and β1 are more stable in this order.) | | | | |

### (Experiment 2) Verification of Effect Obtained by Addition of S2Po

High oleic sunflower oil or macadamia nut oil was used as a raw oil and/or fat, and subjected to 1,3-position enzyme interesterification with ethyl palmitate, and a fatty acid ethyl ester fraction was distilled off by distillation. The obtained oil and/or fat fraction was subjected to multistage fractionation as a raw material using a solvent to obtain an oil and/or fat rich in P2O and an oil and/or fat rich in P2Po. The obtained oils and/or fats were mixed to obtain oil and/or fat compositions of Examples 1 to 7 and Comparative Examples 1 and 2 having various S2Po contents.

The composition of triglycerides in each oil and/or fat composition is shown in Table 2.

**Table 2: Composition of triglycerides in oil and/or fat composition**

| [Table 2] | | | | | | | | | |
|---|---|---|---|---|---|---|---|---|---|
| | Comparative Example 1 | Comparative Example 2 | Example 1 | Example 2 | Example 3 | Example 4 | Example 5 | Example 6 | Example 7 |
| S2M | 87.2 | 86.2 | 86.7 | 87.2 | 87.5 | 87.5 | 86.5 | 87.3 | 86.8 |
| S2Po | 0.0 | 3.6 | 5.8 | 8.0 | 12.3 | 16.7 | 20.8 | 25.3 | 41.6 |
| S2V | 0.0 | 0.3 | 0.4 | 0.5 | 0.8 | 1.0 | 1.4 | 1.6 | 2.4 |
| S2X | 0.0 | 4.0 | 6.2 | 8.5 | 13.1 | 17.7 | 22.2 | 26.9 | 44.0 |
| S2X/S2M% | 0.0 | 4.6 | 7.2 | 9.8 | 15.0 | 20.2 | 25.6 | 30.8 | 50.7 |
| S2O | 87.2 | 82.3 | 80.5 | 78.7 | 74.4 | 69.8 | 64.3 | 60.4 | 42.8 |
| S2O/S2M % | 100.0 | 95.4 | 92.8 | 90.2 | 85.0 | 79.8 | 74.4 | 69.2 | 49.3 |
| S3 | 0.4 | 1.0 | 1.7 | 2.3 | 2.1 | 1.9 | 1.5 | 1.4 | 0.8 |
| SOS/S2O % | 99.1 | 99.7 | 99.6 | 99.5 | 99.5 | 99.2 | 99.5 | 99.8 | 98.8 |

The measurement results of the SFC and fatty acid composition of each oil and/or fat composition are shown in Table 3. In all cases, the SFC at 20°C was 30% or more.

**Table 3: SFC and fatty acid composition of oil and/or fat composition**

| [Table 3] | | | | | | | | | |
|---|---|---|---|---|---|---|---|---|---|
| | Comparative Example 1 | Comparative Example 2 | Example 1 | Example 2 | Example 3 | Example 4 | Example 5 | Example 6 | Example 7 |
| SFC 10°C | 94.3 | 93.6 | 93.7 | 93.8 | 93.8 | 93.6 | 92.1 | 91.8 | 86.1 |
| SFC 20°C | 83.5 | 79.6 | 78.9 | 78.3 | 77.7 | 77.8 | 74.1 | 76.1 | 79.7 |
| SFC 25°C | 73.3 | 64.2 | 60.5 | 56.5 | 45.8 | 32.6 | 28.4 | 37.5 | 55.7 |
| SFC 30°C | 7.4 | 5 | 6.5 | 7.9 | 6.2 | 4.4 | 2 | 1.6 | 0 |
| SFC 35°C | 0 | 0 | 0.2 | 0.4 | 0.1 | 0 | 0 | 0.1 | 0.1 |
| Lauric acid | 0.0 | 0.0 | 0.0 | 0.0 | 0.0 | 0.0 | 0.0 | 0.0 | 0.0 |
| Myristic acid | 0.2 | 0.3 | 0.2 | 0.4 | 0.4 | 0.4 | 0.4 | 0.3 | 0.2 |
| Palmitic acid | 59.2 | 59.6 | 61.0 | 60.7 | 61.6 | 62.4 | 62.2 | 63.5 | 65.7 |
| Palmitoleic acid | 0.0 | 1.9 | 3.1 | 3.9 | 5.2 | 6.5 | 8.1 | 9.2 | 14.5 |
| Stearic acid | 1.8 | 1.7 | 1.5 | 1.6 | 1.4 | 1.2 | 1.2 | 1.0 | 0.4 |
| Oleic acid | 37.7 | 34.9 | 32.7 | 31.2 | 29.2 | 27.3 | 25.9 | 23.7 | 16.9 |
| Cis-vaccenic acid | 0.1 | 0.4 | 0.5 | 0.5 | 0.6 | 0.7 | 0.8 | 0.8 | 1.1 |
| Linoleic acid | 0.5 | 0.5 | 0.7 | 0.5 | 0.7 | 0.9 | 1.1 | 1.3 | 2.1 |
| Arachidic acid | 0.1 | 0.6 | 0.4 | 1.3 | 1.1 | 1.0 | 0.9 | 0.7 | 0.2 |
| Behenic acid | 0.5 | 0.4 | 0.3 | 0.4 | 0.4 | 0.3 | 0.3 | 0.2 | 0.1 |
| ω7 monounsaturated fatty acid (X) | 0.1 | 2.3 | 3.6 | 4.4 | 5.8 | 7.1 | 8.9 | 10.1 | 15.6 |
| X/M (ω7 monounsaturated fatty acid/monounsaturated fatty acid) | 0.3 | 6.1 | 9.8 | 12.4 | 16.5 | 20.7 | 25.5 | 29.8 | 48.1 |
| S (Saturated fatty acid) | 61.8 | 62.7 | 63.5 | 64.4 | 64.9 | 65.3 | 65.0 | 65.8 | 66.5 |

Each oil and/or fat composition was subjected to X-ray crystal structure analysis, and the observation results of a change in crystal polymorph during storage are shown in Table 4. Cooling conditions are as follows: after complete melting at 80°C, 5 µL of each melt was placed on an aluminum pan dropwise and immediately solidified at 5°C for 60 minutes. After solidification, the sample stored at 20°C from Day 1 to Day 14, at 25°C from Day 15 to Day 28, and at 28°C from Day 29 to Day 100 was subjected to X-ray crystal structure analysis to follow a change in crystal polymorph during storage. As a result, when the amount of S2Po in the oil and/or fat composition was 4 wt.% or more and the amount of S2Po in S2M was 5% or more, the most stable polymorphism (β) did not appear at all for at least 100 days, and the crystal polymorphic transformation was suppressed.

**Table 4: Crystal polymorphic behavior of oil and/or fat composition**

| [Table 4] | | | | | | | | | |
|---|---|---|---|---|---|---|---|---|---|
| | Comparative Example 1 | Comparative Example 2 | Example 1 | Example 2 | Example 3 | Example 4 | Example 5 | Example 6 | Example 7 |
| Day 1 | β' | β' | β' | β' | β' | β' + γ (β' >> γ) | β' + γ (β' >> γ) | β' + γ (β' > γ) | β' + γ (β' > γ) |
| Day 35 | β' + β (β' > β) | β' | β' | β' | β' | β' | β' | β' + γ (β' > γ) | β' + γ β' > γ) |
| Day 100 | β' + β (β' ≈ β) | β° + β (β' >> β) | β' | β' | β' | β' | β' | β' | β' + γ (β' > γ) |

| | | | | | | | | | |
|---|---|---|---|---|---|---|---|---|---|
| (The polymorphs γ, β', and β are more stable in this order.) | | | | | | | | | |

### (Experiment 3) Verification of Effect Obtained by Addition of S2Po in Tempering Type Chocolate

Chocolates were prepared using the oil and/or fat compositions of Examples 1 to 7 and Comparative Examples 1 and 2, and the effect of S2Po on the texture and bloom resistance was verified.

### Preparation of StOSt Fat

The 1,3-position enzyme interesterification of high oleic sunflower oil and ethyl stearate was performed, and a fatty acid ethyl ester fraction was distilled off by distillation. The obtained oil and/or fat fraction was subjected to multistage fractionation as a raw material using a solvent to obtain an StOSt fat having an StOSt content of 66.0 wt.%.

### Preparation of Chocolate

Blended were 40.4 wt.% of cacao mass, 2.7 wt.% of cocoa butter, 46.3 wt.% of sugar, 0.6 wt.% of lecithin, 4.7 wt.% of an StOSt fat, and 5.3 wt.% of the oil and/or fat composition of Example or Comparative Example, and chocolate mixes of Examples 1A to 7A and Comparative Examples 1A and 2A were prepared by an ordinary method. In addition, as a standard sample, a chocolate mix containing CBE (Cocoa Butter Equivalent) or cocoa butter instead of the oil and/or fat composition was prepared as a comparative product. The total oil content was 35.1 wt.%, and the composition of triglycerides in each chocolate oil and/or fat is as shown in Table 5 below.

The obtained chocolate mix was thoroughly mixed at 50°C to be sufficiently dissolved, and then cooled to 32°C with stirring. After the mix temperature reached 32°C, an StOSt seed agent (available from Fuji Oil Co., Ltd./trade name "Chocoseed LT") was added in an amount of 0.2 wt.% relative to chocolate, and quickly and sufficiently mixed. Thereafter, the mixture was poured into a mold, and cooled and solidified under the condition of 10°C for 30 minutes.

The cooled chocolate was released from the mold, and after aging at 20°C for 7 days, the texture and bloom resistance were evaluated. (Table 6) The texture was evaluated by five well-trained panelists engaged in development work.

The bloom resistance was evaluated through two cycle tests at from 18°C (12 hr) to 30.5°C (12 hr) and from 20°C (12 hr) to 32°C (12 hr). Evaluation results were based on the following criteria.
- : No bloom, +-: Slightly hazy surface, +: Hazy and whitish surface, ++: Strongly hazy and clearly changed to white, +++: Texture like a powder puff, and severe bloom

The texture evaluation (initial bite) was based on the following criteria.
⊚ Very good snapping properties, very preferable; ∘ Snapping properties present, preferable; △ Weak snapping properties, slightly soft; × No snapping properties, not preferable

The texture evaluation (meltability in the mouth) was based on the following criteria.
⊚ Very quickly melt, and a strong cool feeling felt; ∘ Quickly melt, and a cool feeling felt; △ Slowly melt and leave in the mouth, and a weak cool feeling felt; × Extremely slowly melt and leave in the mouth, and no cool feeling felt at all

**Table 5: Composition of triglycerides in chocolate oil and/or fat**

| [Table 5] | | | | | | | | | | |
|---|---|---|---|---|---|---|---|---|---|---|
| | Comparative Example 1A | Comparative Example 2A | Examples 1A | Examples 2A | Examples 3A | Examples 4A | Examples 6A | Examples 7A | CBE-blended product | Cocoa butter-blended product |
| S2M | 79.1 | 78.9 | 79.0 | 79.1 | 79.1 | 79.1 | 79.1 | 79.1 | 78.1 | 78.9 |
| S2Po | 0.0 | 0.5 | 0.9 | 1.2 | 1.9 | 2.5 | 3.8 | 6.3 | 0.0 | 0.0 |
| S2V | 0.0 | 0.0 | 0.1 | 0.2 | 0.2 | 0.3 | 0.4 | 0.8 | 0.0 | 0.0 |
| S2X | 0.0 | 0.5 | 1.0 | 1.4 | 2.1 | 2.9 | 4.2 | 7.1 | 0.0 | 0.0 |
| S2X/S2M | 0.0% | 0.7% | 1.2% | 1.8% | 2.6% | 3.6% | 5.4% | 8.9% | 0.0% | 0.0% |
| S2O | 78.1 | 77.4 | 77.1 | 76.8 | 76.2 | 75.5 | 74.7 | 74.1 | 71.6 | 78.9 |
| S2O/S2M | 98.8% | 98.1% | 97.6% | 97.2% | 96.3% | 95.5% | 94.5% | 93.8% | 91.7% | 100.0% |
| S3 | 1.3 | 1.4 | 1.5 | 1.6 | 1.6 | 1.5 | 1.4 | 1.3 | 1.4 | 1.3 |
| SOS/S2O | | | | | | | | | | |
| (%) | 98.3 | 98.4 | 98.4 | 98.3 | 98.3 | 98.3 | 98.4 | 98.2 | 97.4 | 98.0 |

**Table 6: Texture and bloom resistance of chocolate**

| [Table 6] | | | | | | | | | | | |
|---|---|---|---|---|---|---|---|---|---|---|---|
| | | Comparative Example 1A | Comparative Example 2A | Examples 1A | Examples 2A | Examples 3A | Examples 4A | Examples 6A | Examples 7A | CBE-blended product | Cocoa butter-blended product |
| Texture | Initial bite | ⊚ | ⊚ | ⊚ | ⊚ | ○ | ○ | ○ | ○ | ○ | ⊚ |
| | Meltability in the mouth | ⊚ | ⊚ | ⊚ | ⊚ | ⊚ | ⊚ | ⊚ | ⊚ | From ○ to △ | ○ |
| Bloom resistance | 21 cycles (from 18 to 30.5°C) | ++ | + | +- | +- | - | - | - | - | + | + |
| | 14 cycles (from 20 to 32°C) | +++ | +++ | +- | +- | - | - | - | - | + | +++ |

It was confirmed that when the amount of S2Po in the chocolate oil and/or fat was 0.9 wt.% or more, both good texture and bloom resistance could be achieved.

### (Experiment 4) Verification on Molding Workability of Tempering type Chocolate

The chocolate mixes of Examples 1A, 3A, 4A, 6A, and 7A prepared in Experiment 3 were used to verify the workability in molding chocolate. In addition, as a standard sample, a chocolate mix containing CBE or cocoa butter instead of the oil and/or fat composition was used as a comparative product.

### Experimental Method

After the chocolate was completely melted at 50°C, the chocolate was stirred and cooled to a product temperature of 40°C. After the temperature reached 40°C, the chocolate was cooled to 27°C at a cooling rate of 0.5°C/min while being stirred at 100 rpm, and then kept at 27°C while being continuously stirred. The chocolate increases in viscosity with crystallization of the oil and/or fat. By comparison of the time (min) to the inflection point of the viscosity increase and the rate of viscosity increase (the maximum value of the slope in the viscosity increase curve after the inflection point, in centipoise/minute), the tempering workability can be evaluated.

**Table 7: Tempering properties of chocolate**

| [Table 7] | | | | | | | |
|---|---|---|---|---|---|---|---|
| | Examples 1A | Examples 3A | Examples 4A | Examples 6A | Examples 7A | CBE-blended product | Cocoa butter-blended product |
| Rate of viscosity increase | 38.7 | 39.7 | 38.9 | 44.2 | 38 | 39.8 | 46.3 |
| Viscosity increase start time (time to reach 27°C is defined as 0 minutes) | 59.6 | 57.6 | 50.9 | 55.3 | 57.2 | 59.2 | 54.8 |

The rate of viscosity increase was lower in all the Examples than that of the standard chocolate containing cocoa butter, i.e., it was considered that no sudden increase in viscosity occurred during the cooling operation. The viscosity increase start time can be associated with the time required for cooling, and a shorter time indicates better workability. However, the viscosity increase start time was equal to or shorter and better in all the Examples than those of the products containing general CBE.

From the above, it could be confirmed that the chocolate mixes of Examples 1A, 3A, 4A, 6A, and 7A had the same or better tempering workability than those of the chocolate mixes containing CBE or cocoa butter.

### (Experiment 5) Verification of Effect Obtained by Addition of S2Po in Non-Tempering Type Chocolate

### Preparation of Chocolate

Blended were 40.4 wt.% of cacao mass, 2.7 wt.% of cocoa butter, 46.3 wt.% of sugar, 0.6 wt.% of lecithin, and 10.0 wt.% of the oil and/or fat composition of Example or Comparative Example, and chocolate mixes of Examples 2B to 7B and Comparative Examples 1B and 2B were prepared by an ordinary method. The total oil content was 35.1 wt.%, and the composition of triglycerides in each chocolate oil and/or fat is as shown in Table 8 below.

**Table 8: Composition of triglycerides in chocolate oil and/or fat**

| [Table 8] | | | | | | | | |
|---|---|---|---|---|---|---|---|---|
| | Comparative Example 1B | Comparative Example 2B | Example 2B | Example 3B | Example 4B | Example 5B | Example 6B | Example 7B |
| S2M | 80 | 80 | 80 | 80 | 80 | 80 | 80 | 80 |
| S2Po | 0.0 | 1.0 | 2.3 | 3.5 | 4.8 | 5.9 | 7.2 | 11.9 |
| S2V | 0.0 | 0.1 | 0.1 | 0.2 | 0.3 | 0.4 | 0.5 | 0.6 |
| S2X | 0.0 | 1.1 | 2.4 | 3.7 | 5.0 | 6.3 | 7.7 | 12.5 |
| S2X/S2M | 0.0% | 1.4% | 3.0% | 4.7% | 6.3% | 7.9% | 9.5% | 15.6% |
| S2O | 79.2 | 77.8 | 76.7 | 75.6 | 74.3 | 72.7 | 71.7 | 66.8 |
| S2O/S2M | 99% | 97% | 96% | 94% | 92% | 91% | 89% | 83% |
| S3 | 1.1 | 1.2 | 1.6 | 1.6 | 1.5 | 1.4 | 1.3 | 1.1 |

The resulting chocolate mix was cooled to 40°C, filled in an aluminum cup and solidified at 20°C. Thereafter, the chocolate mix was stored at 20°C, and the occurrence of bloom and graining was observed. The results are shown in Table 9. When the amount of S2Po in the chocolate oil and/or fat was 2.3 wt.% or more, the effect for suppressing bloom and graining was observed.

Evaluation of bloom and graining was carried out based on the following criteria.
- : No bloom/graining, -+: Slightly hazy surface/slight sign of graining, +: Hazy and whitish surface/graining observed, ++: Strongly hazy and clearly changed to white/distinct graining observed, +++: Texture like a powder puff, and severe bloom/severe graining observed

**Table 9: Bloom resistance of chocolate**

| [Table 9] | | | | | | | | |
|---|---|---|---|---|---|---|---|---|
| | Comparative Example 1B | Comparative Example 2B | Example 2B | Example 3B | Example 4B | Example 5B | Example 6B | Example 7B |
| Surface observation result (Day 2) | +++ | -+ | - | - | - | - | - | - |
| Internal structure observation result (Day 4) | +++ | -+ | - | - | - | - | - | - |

### (Experiment 6) Confirmation of Effect Obtained by Addition of S2Po in Tempering Type Chocolate

High oleic sunflower oil or macadamia nut oil was used as a raw oil and/or fat, and subjected to 1,3-position enzyme interesterification with a mixture of ethyl palmitate and ethyl stearate or with ethyl stearate, and a fatty acid ethyl ester fraction was distilled off by distillation. The obtained oil and/or fat fraction was subjected to multistage fractionation using a solvent as a raw material to obtain an oil and/or fat rich in PPoSt and an oil and/or fat rich in St2Po. These oils and/or fats were mixed with the above-described StOSt fat and cacao butter to obtain the oil and/or fat compositions of Examples 8 to 15 and Comparative Examples 3 and 4 having various S2Po contents. The composition of triglycerides in each oil and/or fat composition is shown in Table 10.

**Table 10: Composition of triglycerides in oil and/or fat composition**

| [Table 10] | | | | | | | | | | |
|---|---|---|---|---|---|---|---|---|---|---|
| | Comparative Example 3 | Examples 8 | Examples 9 | Examples 10 | Examples 11 | Comparative Example 4 | Examples 12 | Examples 13 | Examples 14 | Examples 15 |
| S2M | 81.6 | 81.7 | 81.8 | 81.8 | 81.9 | 85.5 | 85.5 | 85.5 | 85.5 | 85.5 |
| S2Po | 0.0 | 4.0 | 7.7 | 11.5 | 15.3 | 0.0 | 4.2 | 6.5 | 8.9 | 11.9 |
| S2Po/S2M | 0.0 | 4.9 | 9.5 | 14.1 | 18.7 | 0.0 | 4.9 | 7.6 | 10.4 | 13.9 |
| S2O | 81.4 | 77.7 | 74.0 | 703 | 66.6 | 85.5 | 81.4 | 79.0 | 76.6 | 73.7 |
| S2O/S2M | 99.8 | 95.1 | 90.5 | 85.9 | 81.3 | 100.0 | 95.1 | 92.4 | 89.6 | 86.1 |
| S3 | 1.3 | 1.2 | 1.1 | 1.0 | 0.9 | 1.2 | 1.1 | 1.0 | 0.9 | 0.8 |

The results of measuring the SFC and fatty acid composition of each oil and/or fat composition are shown in Table 11.

**Table 11: SFC and fatty acid composition of oil and/or fat composition**

| [Table 11] | | | | | | | | | | |
|---|---|---|---|---|---|---|---|---|---|---|
| | Comparative Example 3 | Examples 8 | Examples 9 | Examples 10 | Examples 11 | Comparative Example 4 | Examples 12 | Examples 13 | Examples 14 | Examples 15 |
| SFC 10°C | 91.1 | 90.1 | 89.0 | 88.4 | 87.6 | 91.6 | 90.9 | 90.5 | 90.2 | 89.9 |
| SFC 20°C | 54.3 | 55.5 | 56.5 | 57.0 | 57.2 | 82.0 | 80.5 | 79.7 | 79.3 | 78.7 |
| SFC 25°C | 6.9 | 6.9 | 8.5 | 9.2 | 9.4 | 72.4 | 70.0 | 68.9 | 67.6 | 66.5 |
| SFC 30°C | 0.9 | 0.6 | 0.3 | 0.7 | 0.2 | 57.4 | 54.4 | 52.6 | 51.0 | 48.7 |
| SFC 35°C | 0.2 | 0.0 | 0.0 | 0.0 | 0.0 | 1.4 | 0.0 | 0.0 | 0.0 | 0.1 |
| SFC 40°C | 0.0 | 0.0 | 0.0 | 0.0 | 0.0 | 0.0 | 0.0 | 0.0 | 0.0 | 0.0 |
| Lauric acid | 0.0 | 0.0 | 0.0 | 0.0 | 0.0 | 0.0 | 0.0 | 0.0 | 0.0 | 0.0 |
| Myristic acid | 0.1 | 0.1 | 0.1 | 0.2 | 0.2 | 0.0 | 0.1 | 0.1 | 0.1 | 0.1 |
| Palmitic acid | 26.2 | 25.2 | 24.2 | 23.2 | 22.2 | 3.7 | 3.8 | 3.9 | 4.0 | 4.1 |
| Palmitoleic acid | 0.2 | 1.9 | 3.6 | 5.2 | 6.9 | 0.0 | 1.5 | 2.4 | 3.3 | 4.4 |
| Stearic acid | 37.0 | 37.4 | 37.8 | 38.2 | 38.6 | 59.7 | 59.5 | 59.4 | 59.4 | 59.3 |
| Oleic acid | 33.0 | 32.0 | 31.0 | 30.0 | 29.0 | 34.4 | 32.7 | 31.7 | 30.7 | 29.5 |
| Linoleic acid | 2.4 | 20 | 1.6 | 1.2 | 0.8 | 0.8 | 0.8 | 0.7 | 0.7 | 0.6 |
| Arachidic acid | 0.9 | 1.1 | 1.2 | 1.3 | 1.4 | 0.5 | 0.7 | 0.9 | 1.0 | 1.2 |
| Behenic acid | 0.2 | 0.3 | 0.5 | 0.6 | 0.8 | 0.9 | 0.9 | 0.9 | 0.8 | 0.8 |
| Po/M | 0.7 | 5.0 | 9.4 | 13.7 | 18.0 | 0.0 | 4.7 | 7.4 | 10.0 | 13.4 |
| S | 64.4 | 64.1 | 63.8 | 63.5 | 63.2 | 64.8 | 65.0 | 65.2 | 65.3 | 65.5 |

Chocolates were prepared using the oil and/or fat compositions of Examples 8 to 15 and Comparative Examples 3 and 4, and the effect of S2Po on the texture and bloom resistance was verified.

### Preparation of Chocolate

By a method similar to the procedure of Experiment 3, 40.4 wt.% of cacao mass, 2.7 wt.% of cocoa butter, 46.3 wt.% of sugar, 0.6 wt.% of lecithin, 5.3 wt.% of palm mid fraction Unilate P110N (available from Fuji Oil Co., Ltd.), and 4.7 wt.% of the oil and/or fat composition of Example or Comparative Example were blended, and chocolate mixes of Examples 8A to 15A and Comparative Examples 3A and 4A were prepared by an ordinary method. The total oil content was 35.1 wt.%, and the composition of triglycerides in each chocolate oil and/or fat is as shown in Table 12 below.

The obtained chocolate mix was molded according to the contents described in Experiment 3, and after aging treatment at 20°C for 7 days, the texture and bloom resistance were evaluated in the same manner as in Experiment 3, and the results are shown in Table 13.

The texture was evaluated by five well-trained panelists engaged in development work.

The bloom resistance was evaluated under the same storage conditions as in Experiment 3, and the evaluation results were also evaluated based on the same criteria.

**Table 12: Composition of triglycerides in chocolate oil and/or fat**

| [Table 12] | | | | | | | | | | |
|---|---|---|---|---|---|---|---|---|---|---|
| | Comparative Example 3A | Examples 8A | Examples 9A | Examples 10A | Examples 11A | Comparative Example 4A | Examples 12A | Examples 13A | Examples 14A | Examples 15A |
| S2M | 87.2 | 87.2 | 87.2 | 87.2 | 87.2 | 87.7 | 87.7 | 87.7 | 87.7 | 87.7 |
| S2Po | 0.1 | 0.7 | 1.2 | 1.7 | 2.2 | 0.1 | 0.7 | 1.0 | 1.3 | 1.7 |
| S2Po/S2M | 0.0 | 0.7 | 1.3 | 1.9 | 2.5 | 0.0 | 0.7 | 1.0 | 1.4 | 1.9 |
| S2O | 81.3 | 80.8 | 80.3 | 79.8 | 79.3 | 81.8 | 81.3 | 80.9 | 80.6 | 80.2 |
| S2O/S2M | 93.3 | 92.6 | 92.0 | 91.4 | 90.8 | 93.3 | 92.6 | 92.3 | 91.9 | 91.4 |
| S3 | 1.2 | 1.2 | 1.2 | 1.2 | 1.2 | 1.2 | 1.2 | 1.2 | 1.2 | 1.2 |

**Table 13: Texture and bloom resistance of chocolate**

| [Table 13] | | | | | | | | | | | |
|---|---|---|---|---|---|---|---|---|---|---|---|
| | | Comparative Example 3A | Examples 8A | Examples 9A | Examples 10A | Examples 11A | Comparative Example 4A | Examples 12A | Examples 13A | Examples 14A | Examples 15A |
| Texture | Initial bite | ⊚ | ⊚ | ⊚ | From ⊚ to ○ | ○ | ○ | ○ | ○ | ○ | ○ |
| | Meltability in the mouth | ○ | From ⊚ to ○ | ⊚ | ⊚ | ⊚ | From ○ to Δ | From ⊚ to ○ | ⊚ | ⊚ | ⊚ |
| Bloom resistance | 28 cycles (18 to 30.5°C) | ++ | +- | - | - | - | ++ | - | - | - | - |
| | 28 cycles (20 to 32°C) | +++ | +- | +- | - | - | ++ | +- | - | - | - |

It was confirmed that when the amount of S2Po in the chocolate oil and/or fat was 0.7 wt.% or more, both good texture and bloom resistance could be achieved.

### Industrial Applicability

It is found that the oil and/or fat composition containing a specific amount of S2X can suppress fat bloom and graining of chocolates mainly composed of S2O, and the application of the oil and/or fat rich in X can be expanded.

## Claims

1. An oil and/or fat composition comprising: 40 wt.% or more of a triglyceride (S2M) in which one monounsaturated fatty acid and two saturated fatty acids are bonded; and 4 wt.% or more of a triglyceride (S2X) in which one ω7 monounsaturated fatty acid and two saturated fatty acids are bonded, wherein S represents a saturated fatty acid having from 16 to 22 carbon atoms, M represents a monounsaturated fatty acid having from 16 to 22 carbon atoms, and X represents an ω7 monounsaturated fatty acid.

2. The oil and/or fat composition according to claim 1, wherein a proportion of the S2X in the S2M is 5% or more.

3. The oil and/or fat composition according to claim 1 or 2, wherein a solid fat content (SFC) at 20°C is 30% or more.

4. The oil and/or fat composition according to claim 1 or 2, wherein the oil and/or fat composition is for a chocolate.

5. A chocolate comprising the oil and/or fat composition described in claim 1 or 2.

6. The chocolate according to claim 5, wherein fat bloom or graining is suppressed.

7. The chocolate according to claim 5, wherein an amount of the S2X in chocolate oil and/or fat is 0.7 wt.% or more.

8. The chocolate according to claim 7, wherein the chocolate is a tempering type chocolate.

9. The chocolate according to claim 7, wherein the chocolate is a non-tempering type chocolate.

10. A method for producing a chocolate, the method comprising: preparing a chocolate mix containing the oil and/or fat composition described in claim 1 or 2, wherein an amount of the S2X in chocolate oil and/or fat is 0.7 wt.% or more; and solidifying the prepared mix with or without a tempering treatment.

11. An agent for suppressing crystal transformation of an S2O triglyceride, the agent comprising S2X as an active ingredient, wherein S represents a saturated fatty acid having from 16 to 22 carbon atoms, X represents an ω7 monounsaturated fatty acid, and O represents oleic acid.

12. A method for suppressing fat bloom or graining in a chocolate, the method comprising adding the oil and/or fat composition described in claim 1 or 2 to a chocolate mix.
